Europäisches Patentamt

European Patent Office

Office européen des brevets

(11) Publication number: **0 326 731 B1**

# EUROPEAN PATENT SPECIFICATION

(45) Date of publication of patent specification: **05.08.92**  (51) Int. Cl.⁵: **C02F 3/06**

(21) Application number: **88300929.2**

(22) Date of filing: **04.02.88**

(54) **Sewage treatment plant.**

(43) Date of publication of application:
**09.08.89 Bulletin  89/32**

(45) Publication of the grant of the patent:
**05.08.92 Bulletin  92/32**

(84) Designated Contracting States:
**AT BE CH DE ES FR GR IT LI LU NL SE**

(56) References cited:
**EP-A- 0 002 115**
**GB-A- 1 549 400**
**US-A- 3 126 333**

(73) Proprietor: **KLARGESTER ENVIRONMENTAL
ENGINEERING LIMITED
College Road Aston Clinton
Aylesbury Buckinghamshire, HP22 5EW(GB)**

Proprietor: **G.H. JENSEN LIMITED
42 Bulbridge Road Wilton
Salisbury Wiltshire SP2 0LF(GB)**

(72) Inventor: **Jensen, Geoffrey Harold
42 Bulbridge Road
Wilton Salisbury Wiltshire SP2 0LF(GB)**

(74) Representative: **Newby, John Ross et al
J.Y. & G.W. Johnson Furnival House 14/18
High Holborn
London WC1V 6DE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to sewage treatment plant and is particularly, but not exclusively, concerned with sewage treatment plant suitable for installation below ground and which is suitable either for a single dwelling or for a small community of dwellings as a substitute for a cesspool or septic tank used where a main sewage drainage system is not available.

A cesspool is generally unsatisfactory and its use involves several problems and disadvantages, including a tendency to generate odours, to pollute the surroundings if it overflows and the need for regular emptying (e.g. by a road vehicle). A septic tank is liable to cause pollution when it is installed in an area where the ground conditions are not suitable. People living in areas where sewage drainage via a main is not available, have a need for an improved form of apparatus for the treatment of sewage. The present invention provides a way of meeting this need.

US-A-3126333 discloses a sewage treatment plant in which a filter bed is housed within a liquid-containing tank and air flows are periodically used to lower the liquid level in the filter housing, back wash the filter and enliven aerobic bacteria present. An outlet from the filter is closed by a pivoted valve actuated by the air flows.

According to the invention a sewage treatment plant comprising a tank containing liquid sewage to a normal surface level and air above said normal surface level, a sewage input to the tank, an outlet from the tank for treated sewage, a stationary biomass support means within the tank and means for periodically passing air into the tank to raise and lower said surface level within the tank to ensure that biomass on the support means is alternately contacted by the liquid and by air, which is characterised in that the biomass support means is located above the normal surface level where it will be wetted by the liquid when the liquid level rises above the normal surface level.

Desirably the means for periodically raising and lowering the surface level within the tank comprises an inverted box to which air under pressure can be supplied, and the box contains a further biomass support means which is contacted by air when the biomass support means is contacted by liquid and vice versa.

In plant in accordance with the invention pollutants in the sewage being treated are absorbed into the biomass supported on the support means and then oxidised to reduce the pollutants to harmless substances and plant nutrients.

The plant can be divided into primary, main and final chambers and humus sludge that collects in the final chamber can be recirculated for further oxidation so that during periods of low inflow of fresh pollutants, endogenous respiration of the total biomass occurs, hence reducing total sludge production.

By mixing untreated and treated sewage in the tank and by recirculating final effluent, the slower multiplying nitrifying bacteria are given suitable conditions, since the carbonaceous oxygen-demanding bacteria concentration is reduced to a level below that at which the latter dominates.

The biomass support means preferably comprises a plurality of upright or inclined contactor plates of corrugated, or dimpled form or otherwise having raised surfaces. The plates are suitable situated so that they form a large number of upright or inclined channels by alternate reversal of the plates or other arrangement that ensures the plates touch at high points only. Such contactor plates are preferably made from polypropylene or any other suitable material, vacuum formed or pressed to the desired shape, so that when they are joined together they form a mesh structure of sufficient strength to resist the forces caused by the movement of liquid through the structure and the weight of biomass adhering on the plates. Alternative biomass support means could be formed from random or regular polymer fibres or strands between 1 and 1000 microns diameter suitably supported in layers up to 20 mm thick, with a percentage of voids between the fibres in excess or 90% by volume. The layers should be disposed substantially vertically to allow drainage.

The volume within an inverted box provided in the tank forms an anoxic zone during certain periods of the operation of the plant, so allowing denitrification to occur. Sludge that rises to the surface due to nitrogen bubbles forming, is broken down by the action of the raising and lowering of the liquid surface, through the biomass support means. This liquid movement also encourages flocculation of biomass particles, so allowing them to be more easily separated from the liquid.

During the period when the liquid level is raised, after passing between contactor plates of the biomass support means, some of the mixed treated sewage liquids with reduced amounts of pollutants and flocculated fine solids, can pass over into a final chamber, preferably containing a basket of random or regular coarse fibres or strands between 100 microns and 1 mm in diameter or random or regular surfaces with voids between them exceeding 90% by volume. The liquids pass up through this basket and the clarified liquid passes to the outlet. As the liquid level in the main chamber of the tank falls (e.g. when a blower motor is switched off) the sludge collected in the final chamber together with liquid siphons back into the main body of the tank through a pipe fitted with a non-return valve means, preferably a lay flat tube or other non-return arrangement, not likely to easily block.

A sewage treatment plant according to the invention offers a number of advantages:

A. It is suitable for a single house but can also be used for treating a larger volume of sewage from larger sources.

B. It contains no electro-mechanical components within the buried tank, this is an important advantage if the plant is sited where flooding may occur.

C. The sewage is not stored for long periods before treatment and this reduces the possibility of septic sewage and hence odours developing.

D. It can be easily fitted with stand-by equipment to ensure continuity of operation.

E. The sewage is treated mainly by the fixed film process with static biological contactor surfaces.

F. Treatment also occurs due to the oxidation of suspended biomass, using oxygen dissolved when the liquids are draining from the biomass support surfaces.

G. The raising and lowering of the surface level in the tank ensures regular mixing of incoming sewage with treated sewage and biomass so that aerobic conditions exist at all stages of treatment of sewage within the tank.

In order that the operation of the invention may be more fully appreciated, a preferred form of sewage treatment plant in accordance with the invention will now be described, by way of example, with reference to the accompanying drawings, in which

Figure 1 is a diagrammatic general arrangement in vertical section through the sewage plant,

Figure 2 is a diagrammatic plan from above of the plant shown in Figure 1 at the level of the outlet,

Figure 3 is a partial sectional view on an enlarged scale through a preferred form of biomass support means for use in the plant of Figure 1, and

Figure 4 is a partial sectional view, also on an enlarged scale of flocculation medium for use in the plant of Figure 1.

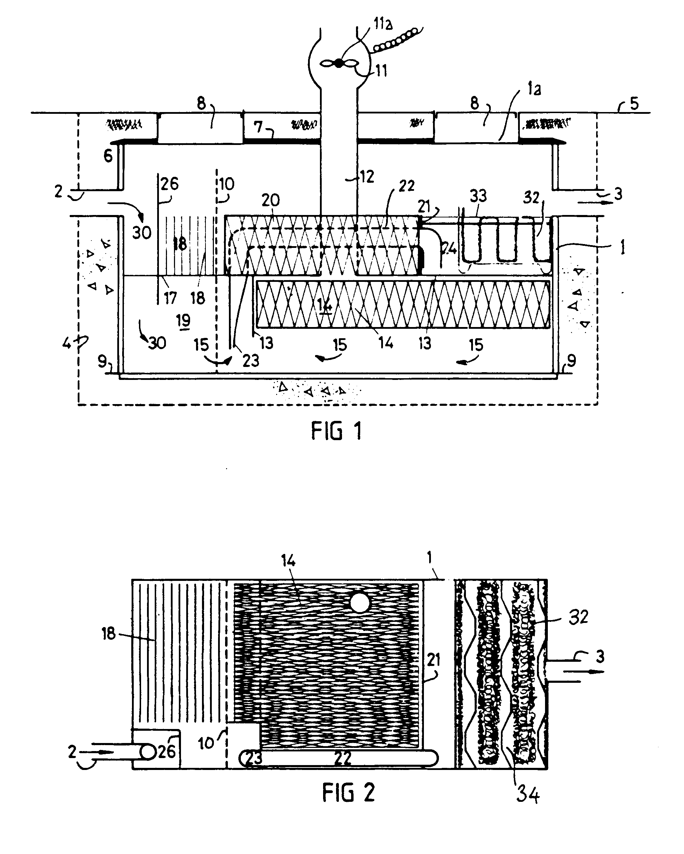

Referring to Figure 1, the sewage treatment plant shown is housed in a tank 1 which may be of any shape, e.g. circular or square or (as shown) rectangular in plan. The tank 1 is installed in an excavation 4 so that its upper rim 1a is below ground level 5, just far enough so that sufficient soil can be placed on a tank cover 7, to allow grass or other light vegetation to grow. The cover 7, is supported on the rim 1a so that its weight is borne by tank walls 6, and has openings 8, placed so that inspection and maintenance can be carried out.

The tank is retained in the ground by bottom flanges 9 which resist flotation forces, should the soil surrounding the excavation become waterlogged. The flanges 9 are shown further secured by concrete surrounding the tank and this is desirable if other suitable backfill material is not available for this purpose.

Sewage 30, enters the plant via an inlet pipe 2 and is deflected downwardly by a baffle 26, into a primary chamber 19. The normal water level in the plant is shown at 17 and this level applies when an electrically-powered blower 11, is not operating. Incoming sewage 30 mixes with partially treated sewage and biomass in the chamber 19 to form a mixed liquor 15 which flows on through a screen 10 into a main chamber of the plant. The screen 10 retains solids whose least diameter is 10 mm or more in the chamber 19 and this screen can be made from polymer strands laid down to form a net or mesh.

Mixed liquor 15 at the level 17 also fills an inverted box 13, which contains contactor media 14 of a biomass support means. When the blower 11 operates, air is forced down a pipe 12 to displace the liquor 15 from the inverted box 13. This displacement causes the level of the surface of the liquid in the tank to rise above the level 17 causing liquor 15 to rise through contactor media 18 and 20 in further biomass support means and force some liquor 15 to backwash through the screen 10 diluting the incoming sewage 30. The action of the level of the liquor rising, breaks up any larger floating solids or scum solids and the turbulence of the liquor as it flows over the surfaces of the contactor media 18 and 20 causes flocculation of finer particles. The blower 11 is operated by a timer controlled switch feeding electrical power to a blower motor 11a at sufficiently frequent intervals for the plant to operate satisfactorily in oxidising the pollutants and to have an oxidation potential in the mixed liquor.

As the mixed liquors 15 pass over the surfaces of the contactor media 18 and 20 and 14, biomass becomes deposited there, the biomass adhering to the media surface, adsorbing pollutants from the sewage. When the liquor level reaches the top of a dividing wall 21, it overflows into a final zone 24 of the plant and it is deflected down to the bottom of this zone from where it rises to a level 33 through a final clarification stage 32 where a random mesh of polymer fibres 34a combined with a structure of supporting plates 34b create a flocculation medium 34 where flocculation and clarification can take place before the final effluent passes to an outlet 3. The blower motor 11a is switched off and the air contained within the inverted box 13 is displaced back up the pipe 12 by the liquor level rising. Biomass on the contactor surfaces 14, would have been oxidising adsorbed pollutants during the period it was exposed to air and the liquor retained by that biomass and by surface tension of the media would become saturated with oxygen.

As the liquor level falls back to the level 17, the contactor media 18 and 20 become exposed to air and the biomass and the surrounding water adhering to the media surface absorb oxygen from the air, which is used by the biomass to oxidise the pollutants. Biomass sloughing of the media surfaces forms an "activated sludge" that utilises dissolved oxygen in the water to oxidise pollutants. Facultative bacteria that utilise chemically combined oxygen in nitrate will form in the anoxic conditions that exist on the media 14 in the inverted box 13. This enables a reduction in the total nitrate nitrogen to occur, as well as oxidising any carbonaceous pollutants present.

When the level of the liquor returns to the level 17, sludge and liquids in the final zone 24 are siphoned back via a siphon pipe 22 which ends in a non-return valve 23 formed by a length of lay-flat tubing. The valve 23 is located within the area between the screen 10 and the inverted box 13. This siphonic action ensures the removal of surplus sludge from the final zone 24, mixing sludge and treated effluent with incoming sewage with biomass, diluting the sewage and making chemically combined oxygen from nitrate available to allow denitrification to occur.

If suspended solids concentration builds up, sludge will collect in the area below the inverted box 13. Coarse non-biodegradable items such as rubber latex, polymers, siliconised cellulose, man-made fibres etc. will collect in the area 19 upstream of the screen 10. The surplus sludge and non-biodegradables can be removed by suction from a tanker applied at service intervals through the openings 8.

The controlled periods of discharge from the outlet 3 and the volume of liquor below the inlet level when the blower motor 11a is switched off, enable the plant to cope with peak inflows. The plant will normally produce an effluent suitable for discharge to a stream or water-course, provided there is sufficient diluting water (e. g. in accordance with the recommendations of the United Kingdom Royal Commission) or to the ground if not, provided also that the inlet sewage quantity and strength are within the normal design operating conditions, there are no adverse effects from biocides and the biomass within the plant has been fully established.

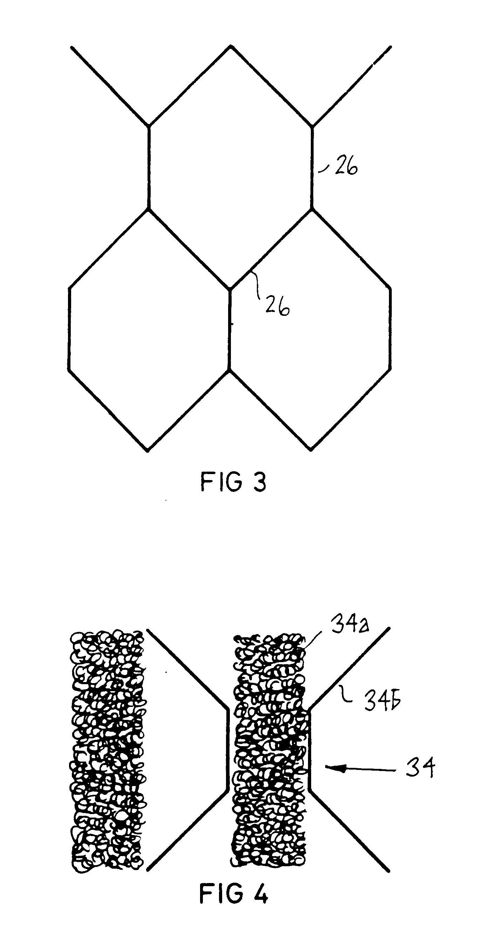

Figure 3 shows a typical mesh of surfaces 26 for forming the contactor media 14, 18 and/or 20, such surfaces being formed, for example of moulded sheets of a lightweight plastics material (such as polypropylene) arranged in a closely packed stack so that narrow channels are formed between the sheets allowing the liquor to flow onto and freely drain away from the surfaces as the level moves above and below the level 17.

Figure 4 shows in enlarged cross-section a typical flocculation medium 34 to be used in the final zone 24. The fibres 34a act to disturb any streamlined flow which might otherwise be generated between the plates 34b.

## Claims

1. A sewage treatment plant comprising a tank (1) containing liquid sewage to a normal surface level (17) and air above said normal surface level, a sewage input (2) to the tank, an outlet (3) from the tank for treated sewage, a stationary biomass support means within the tank and means (11a, 13) for periodically passing air into the tank to raise and lower said surface level within the tank to ensure that biomass on the support means (14) is alternately contacted by the liquid and by air, characterised in that the biomass support means (18, 20) is located above the normal surface level (17) where it will be wetted by the liquid when the liquid level rises above the normal surface level (17).

2. A plant according to claim 1, in which the means for periodically raising and lowering the surface level within the tank comprises an inverted box (13) to which air under pressure can be supplied (via 12), characterised in that the box (13) contains a further biomass support means (14) which is contacted by air when the biomass support means (18, 20) is contacted by liquid and vice versa.

3. A plant according to claim 1 or claim 2, characterised in that the biomass support means (14, 18, 20) within the tank defines a plurality of channels through which the liquid can flow in one direction as the surface level rises and can flow in the opposite direction as the surface level falls.

4. A plant according to any preceding claim, characterised in that a primary chamber (19) is located adjacent to the input (2) and upstream of a main chamber of the plant containing said biomass support means (14, 20) and a final zone (24) is located adjacent to the outlet (3) and downstream of the main chamber.

5. A plant according to claim 4, characterised in that each chamber contains a separate biomass support means (20: 18: 32) above the normal liquid level (17).

6. A plant according to claim 4 or claim 5, characterised in that a screen (10) is disposed between the primary chamber (19) and the main chamber of the plant, the screen (10) filtering off solids above a particular size and preventing the same flowing into the main chamber.

7. A plant according to claim 6, characterised in that the periodic changes in surface level within the tank cause regular backwashing of the screen (10).

8. A plant according to any one of claims 4 to 7, characterised in that the final zone (24) is filled from the main chamber only when the surface level reaches or exceeds its intended maximum height within the tank.

9. A plant according to claim 8, characterised in that the final zone (24) contains a flow return duct (22) leading back to the main chamber and valve means (23) associated with the flow-return duct to prevent liquid flow from the main chamber to the final zone through the duct.

10. A plant according to claim 9, characterised in that the final zone (24) includes means (32) to break up streamline flow.

**Revendications**

1. Installation de traitement d'eaux d'égout, comprenant une cuve (1) contenant des égouts liquides à un niveau normal (17) de la surface et de l'air au-dessus dudit niveau de surface normal, une entrée des eaux d'égout (2) vers la cuve, une sortie (3) de la cuve pour les eaux d'égout traitées, un dispositif stationnaire de support de biomasse à l'intérieur de la cuve et un dispositif (11a, 13) pour faire passer de l'air périodiquement dans la cuve afin d'élever et d'abaisser ledit niveau de surface à l'intérieur de la cuve pour faire en sorte que la biomasse située sur le dispositif de support (14) soit en contact alternativement avec le liquide et avec l'air, caractérisée en ce que le dispositif de support de la biomasse (18, 20) est situé au-dessus du niveau de surface normal (17) où il sera mouillé par le liquide lorsque le niveau du liquide s'élèvera au-dessus du niveau de surface normal (17).

2. Installation selon la revendication 1, dans laquelle le dispositif pour élever et abaisser périodiquement le niveau de surface à l'intérieur de la cuve comprend une caisse inversée (13) dans laquelle on peut amener de l'air sous pression (par 12), caractérisée en ce que la caisse (13) contient un autre dispositif de support de la biomasse (14) qui est en contact avec l'air lorsque le dispositif de support de la biomasse (18, 20) est mis en contact avec le liquide et vice versa.

3. Installation selon la revendication 1 ou la revendication 2, caractérisée en ce que le dispositif de support de la biomasse (14, 18, 20) à l'intérieur de la cuve définit une pluralité de canaux dans lesquels le liquide peut s'écouler dans un sens lorsque le niveau de surface s'élève et peut s'écouler dans l'autre sens lorsque le niveau de surface descend.

4. Installation selon l'une quelconque des revendications précédentes, caractérisée en ce qu'une enceinte primaire (19) est située en position adjacente à l'entrée (2) et en amont d'une enceinte principale de l'installation contenant ledit dispositif de support de la biomasse (14, 20) et un zone finale (24) est située en position adjacente à la sortie (3) et en aval de l'enceinte principale.

5. Installation selon la revendication 4, caractérisée en ce que chaque enceinte contient un dispositif de support de la biomasse séparé (20; 18; 32) situé au-dessus du niveau normal du liquide (17).

6. Installation selon la revendication 4 ou la revendication 5, caractérisée en ce qu'une grille (10) est disposée entre l'enceinte primaire (19) et l'enceinte principale de l'installation, la grille (10) filtrant les solides de granulométrie supérieure à une valeur donnée et les empêchant de s'écouler dans l'enceinte principale.

7. Installation selon la revendication 6, caractérisée en ce que les variations périodiques du niveau de surface à l'intérieur de la cuve provoquent le rétrolavage régulier de la grille (10).

8. Installation selon l'une quelconque des revendications 4 à 7, caractérisée en ce que la zone finale (24) est remplie depuis l'enceinte principale seulement lorsque le niveau de surface atteint ou dépasse sa hauteur maximale prévue à l'intérieur de la cuve.

9. Installation selon la revendication 8, caractérisée en ce que la zone finale (24) contient une conduite de trop plein (22) qui retourne dans l'enceinte principale et un dispositif de vanne (23) associé à la conduite de trop plein pour empêcher tout écoulement de liquide depuis l'enceinte principale vers la zone finale par la conduite.

10. Installation selon la revendication 9, caractérisée en ce que la zone finale (24) comprend un dispositif (32) pour rompre l'écoulement laminaire.

**Patentansprüche**

1. Abwasserbehandlungsanlage, bestehend aus einem flüssiges Abwasser bis zu einem normalen Oberflächenniveau (17) und darüber Luft enthaltenden Behälter (1), einem Abwassereinlaß (2) in den Behälter, einem Auslaß (3) daraus für behandeltes Abwasser, einem ortsfesten Biomasseträgermittel innerhalb des Behälters und Vorrichtungen (11a, 13) zur periodischen Einführung von Luft in den Behälter, um besagtes Oberflächenniveau innerhalb des Behälters zu heben und zu senken, damit die Biomasse auf dem Trägermittel (14) abwechselnd mit der Flüssigkeit und mit Luft in Berührung kommt, dadurch gekennzeichnet, daß das Biomasseträgermittel (18, 20) über dem normalen Oberflächenniveau (17) angeordnet ist, wo es von der Flüssigkeit benetzt wird, wenn das Flüssigkeitsniveau über das normale Oberflächenniveau (17) ansteigt.

2. Anlage nach Anspruch 1, worin die Vorrichtung zum periodischen Heben und Senken des Oberflächenniveaus innerhalb des Behälters aus einem umgekehrten Kasten (13) besteht, dem Druckluft (über 12) zuführbar ist, dadurch gekennzeichnet, daß der Kasten (13) ein weiteres Biomasseträgermittel (14) enthält, das mit Luft in Berührung kommt, wenn das Biomasseträgermittel (18, 20) mit Flüssigkeit in Berührung kommt, und umgekehrt.

3. Anlage nach Anspruch 1 oder 2, dadurch gekennzeichnet, daß das Biomasseträgermittel (14, 18, 20) im Behälter mehrere Kanäle begrenzt, durch welche die Flüssigkeit bei ansteigendem Oberflächenniveau in eine Richtung und bei absinkendem Oberflächenniveau in der entgegengesetzten Richtung strömen kann.

4. Anlage nach einem der vorhergehenden Ansprüche, dadurch gekennzeichnet, daß eine Primärkammer (19) nächst dem Einlaß (2) und vor einer besagtes Biomasseträgermittel (14, 20) enthaltenden Hauptkammer der Anlage sowie eine Endzone (24) nächst dem Auslaß (3) und nach der Hauptkammer angeordnet sind.

5. Anlage nach Anspruch 4, dadurch gekennzeichnet, daß jede Kammer ein getrenntes Biomasseträgermittel (20: 18: 32) über dem normalen Flüssigkeitsniveau (17) enthält.

6. Anlage nach Anspruch 4 oder 5, dadurch gekennzeichnet, daß zwischen der Primärkammer (19) und der Hauptkammer der Anlage ein Sieb (10) angeordnet ist, das Feststoffe über einer gewissen Größe abfiltriert und verhindert, daß diese in die Hauptkammer fließen.

7. Anlage nach Anspruch 6, dadurch gekennzeichnet, daß die periodischen Wechsel im Oberflächenniveau innerhalb des Behälters regelmäßige Rückspülung des Siebs (10) bewirken.

8. Anlage nach einem der Ansprüche 4 bis 7, dadurch gekennzeichnet, daß sich die Endzone (24) von der Hauptkammer her nur füllt, wenn das Oberflächenniveau seine größte Sollhöhe innerhalb des Behälters erreicht oder übersteigt.

9. Anlage nach Anspruch 8, dadurch gekennzeichnet, daß die Endzone (24) eine zur Hauptkammer zurückführende Rückströmleitung (22) und dieser zugeordnete Ventileinrichtungen (23) zur Verhinderung einer Flüssigkeitsströmung aus der Hauptkammer durch die Leitung zur Endzone enthält.

10. Anlage nach Anspruch 9, dadurch gekennzeichnet, daß die Endzone (24) ferner Mittel (32) zur Auflösung von Stromlinienfluß enthält.

FIG 1

FIG 2

FIG 3

FIG 4